# NEUE EUROPÄISCHE PATENTSCHRIFT

(11) **EP 1 495 934 B2**
(45) Veröffentlichungstag und Bekanntmachung des Hinweises auf die Entscheidung über den Einspruch: **10.09.2014**
(45) Hinweis auf die Patenterteilung: 29.08.2007
(21) Anmeldenummer: 04015101.1
(22) Anmeldetag: 28.06.2004
(51) Int. Cl.: B60T 17/00, B01D 53/04

(54) **Lufttrockner**
Air dryer
Dessiccateur d'air

(30) Priorität: 30.06.2003 DE 10329401
(43) Veröffentlichungstag der Anmeldung: 12.01.2005
(73) Patentinhaber: KNORR-BREMSE Systeme für Nutzfahrzeuge GmbH, 80809 München (DE)
(72) Erfinder: Pellecuer, François, 80333 München (DE); Uhland, Matthias, 89073 Ulm (DE); Hilberer, Eduard, 68766 Hockenheim (DE)
(74) Vertreter: Schumacher & Willsau

(56) Entgegenhaltungen:
- EP-A2- 1 626 796
- WO-A2-2004/011125
- WO-A2-2004/103509
- DE-A1- 19 508 815
- DE-C2- 3 703 536
- DE-C2- 4 139 680
- DE-T2- 68 919 860
- DE-T5- 10 392 976
- GB-A- 1 041 882
- GB-A- 1 544 822
- US-A- 5 286 283
- US-A1- 2004 074 386
- PATENT ABSTRACTS OF JAPAN Bd. 011, Nr. 379 (C-463), 10. Dezember 1987 (1987-12-10) & JP 62 149321 A (NIPPON AIR BRAKE CO LTD), 3. Juli 1987 (1987-07-03)

## Beschreibung

Die Erfindung betrifft einen Lufttrockner, insbesondere zum Einsatz in Druckluftanlagen von Nutzfahrzeugen, mit einem Gehäuse, einem in dem Gehäuse angeordneten Trockeneinsatz, in dem Trockenmittel enthalten ist, und einer Filtereinrichtung, die einen Vorfilterbereich von einem Nachfilterbereich trennt, zum Reinigen der in den Lufttrockner einströmenden Luft.

Derartige Lufttrockner werden verwendet, um Druckluftanlagen mit möglichst trockener Luft zu versorgen. Hierdurch wird die Bremsanlage von Nutzfahrzeugen geschont, da die Korrosion von Leitungen verlangsamt wird. Letztlich tragen Lufttrockner zu einer Erhöhung der Sicherheit von Nutzfahrzeugen bei. Das Dokument US 5286283 beschreibt dem Oberbegriff des Anspruchs 1.

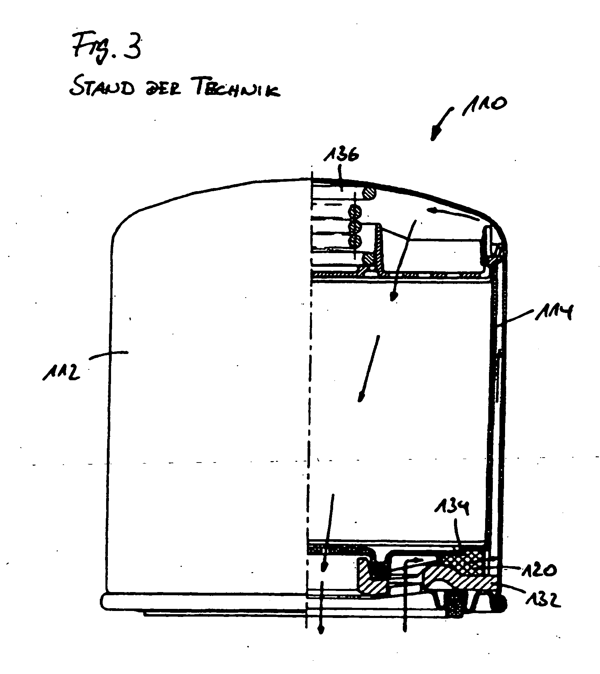

Figur 3 zeigt einen Lufttrockner 110 des Standes der Technik. Der Lufttrockner 110 umfasst ein Gehäuse 112, in dem ein Trockeneinsatz 114 angeordnet ist. In dem Trockeneinsatz 114 befindet sich Trockenmittel. Zwischen einer im unteren Bereich des Lufttrockners 110 angeordneten Metallplatte 132 und einem Metallprofil 134 ist ein Vliesfilter 120 angeordnet. Das in dem Trockeneinsatz 114 befindliche Trockenmittel wird durch eine im oberen Bereich des Lufttrockners 110 angeordneten Feder 136 in dichter Packung gehalten.

Die in den Lufttrockner einströmende Luft ist mit Wasser und weiteren Fremdstoffen beladen. Diese weiteren Fremdstoffe umfassen unter anderem Öl, das zum Teil dampfförmig ist und aufgrund der hohen Temperaturen und der hohen Drücke häufig in mehrfach gecrackter Form vorliegt. Die letztgenannten Substanzen sind für Bauteile einer Druckluftanlage äußerst schädlich. Beispielsweise setzen gecrackte Öle die Lebensdauer von Dichtelementen stark herab. Insbesondere zum Entfernen dieser schädlichen Stoffe aus der zuströmenden Luft, bevor diese in dem Trockeneinsatz 114 getrocknet wird, ist das Vliesfilter 120 vorgesehen.

Nach dem Austritt der zum Teil gereinigten Luft aus dem Vliesfilter 120 kann diese entlang der Wand des Gehäuses 112 nach oben strömen und von dort nach unten in den Trockeneinsatz 114 einströmen. Die getrocknete und teilweise von Ölen befreite Luft kann dann nach unten aus dem Trockeneinsatz 114 austreten und schließlich den Kreisen der Druckluftanlage zugeführt werden.

An dem beschriebenen Lufttrockner des Standes der Technik ist problematisch, dass das Vliesfilter mit der Zeit verschmutzt, was eine Herabsetzung der Filterwirkung bewirkt und was ein Auswechseln des Filters erforderlich macht.

Der Erfindung liegt die Aufgabe zugrunde, die Filterwirkung eines Lufttrockners im Hinblick auf die in der einströmenden Luft befindlichen Fremdpartikel zu verbessern und insbesondere ein Auswechseln der Filtereinrichtung zumindest weitgehend entbehrlich zu machen.

Diese Aufgabe wird mit den Merkmalen des unabhängigen Anspruches gelöst.

Vorteilhafte Ausführungsformen der Erfindung sind in den abhängigen Ansprüchen angegeben.

Die Erfindung baut auf dem gattungsgemäßen Lufttrockner dadurch auf, dass ein Rückschlagventil vorgesehen ist, das eine Luftströmung von dem Vorfilterbereich in den unmittelbar an die Filtereinrichtung anschließenden Nachfilterbereich unter Umgehung der Filtereinrichtung verhindert und das eine Luftströmung von dem Nachfilterbereich in den Vorfilterbereich unter Umgehung der Filtereinrichtung bei entsprechenden Druckverhältnissen erlaubt, so dass ein Transport von Fremdpartikeln aus dem Nachfilterbereich in den Vorfilterbereich unter Umgehung der Filtereinrichtung möglich ist. Wenn eine Filtereinrichtung verwendet wird, bei der sich Fremdpartikel im Nachfilterbereich ansammeln, können die Fremdpartikel im Falle eines entsprechenden Druckgefälles über das Rückschlagventil von dem Nachfilterbereich in den Vorfilterbereich transportiert werden. Aufgrund dieses "automatischen" Reinigungsvorgangs, der immer dann auftritt wenn die Druckverhältnisse in immer wiederkehrenden Abständen ein Überströmen von Luft aus dem Nachfilterbereich in den Vorfilterbereich bewirken, ist ein häufiges Auswechseln der Filtereinrichtung nicht erforderlich.

Die Erfindung ist insbesondere in dem Fall vorteilhaft einsetzbar, dass die Filtereinrichtung ein Koaleszenzfilter umfasst. Mit einem solchen Koaleszenzfilter werden feinste Ölpartikel durch ein oberflächenaktives Material zurückgehalten und zu größeren Öltropfen umgebildet. Im Nachfilterbereich sammeln sich diese Partikel dann an, und sie können erfindungsgemäß über das Rückschlagventil bei entsprechenden Druckverhältnisses entfernt werden.

In einer Ausführungsform der Erfindung kann vorgesehen sein, dass das Koaleszenzfilter eine Faltenstruktur aufweist. Diese Faltenstruktur kann beispielsweise nach Art eines Luftfilters die aktive Filteroberfläche vergrößern.

Es ist aber auch denkbar, dass das Koaleszenzfilter eine gerollte Struktur aufweist. Eine solche gerollte beziehungsweise gewickelte Anordnung eines Koaleszenzfilters trägt ebenfalls zur Vergrößerung der Filterfläche bei.

In einer bevorzugten Ausführungsform der vorliegenden Erfindung ist vorgesehen, dass die Filtereinrichtung ein vor dem Koaleszenzfilter angeordnetes Vliesfilter aufweist. Dieses dient der Vorreinigung der einströmenden Luft, so dass letztlich die Lebensdauer des Koaleszenzfilters noch weiter erhöht wird. Das Vliesfilter kann so eingebaut werden, dass es leicht auswechselbar ist.

Die Erfindung ist in besonders nützlicher Weise dadurch weitergebildet, dass der Lufttrockner in integrierter Bauweise mit einem Druckregler und einem zugehörigen Ablasssicherheitsventil ausgestattet ist und dass eine Luftströmung von dem Nachfilterbereich in den Vorfilterbereich und damit ein Transport von Fremdpartikeln unter Umgehung der Filtereinrichtung erfolgt, wenn das Ablasssicherheitsventil öffnet. Wenn das Ablasssicherheitsventil, das parallel zur Druckluftversorgung angeordnet ist, öffnet, bricht der Druck am Eingang des Lufttrockners schlagartig zusammen. Folglich ist der Druck im Vorfilterbereich niedriger als im Nachfilterbereich, so dass ein Überströmen von Luft und damit von Fremdpartikeln aus dem Nachfilterbereich über das Rückschlagventil in den Vorfilterbereich erfolgen kann. Die Fremdpartikel werden über das Ablassventil ausgeblasen. Je nach Fahrbetrieb kann ein solches Öffnen des Ablassventils in unterschiedlichen Zeitabständen erfolgen. Typischerweise findet ein Öffnen durchschnittlich in Abständen von etwa einer Minute statt.

Das Rückschlagventil umfasst eine Gummilippe. Dies ist eine einfache, in den Lufttrockner integrierbare Maßnahme, um die Rückschlagventilfunktion zur Verfügung zu stellen. Die Gummilippe trennt den radial außen liegenden Nachfilterbereich vom radial innen liegenden Vorfilterbereich, und sie stellt die Rückschlagfunktion zur Verfügung, indem sie radial außen liegend befestigt ist.

Der Erfindung liegt die Erkenntnis zugrunde, dass eine Selbstreinigung eines Lufttrockners ermöglicht wird, indem hinter Filtereinrichtung angesammelte Fremdpartikel bei entsprechenden Druckverhältnisses über ein Rückschlagventil entfernt werden. Insbesondere im Falle von Koaleszenzfiltern, bei denen eine Ansammlung der Fremdpartikel im Nachfilterbereich erfolgt, ist die Erfindung von besonderem Nutzen.

Die Erfindung wird nun mit Bezug auf die begleitenden Zeichnungen anhand bevorzugter Ausführungsformen beispielhaft erläutert.

Dabei zeigt:
- Figur 1: eine teilweise geschnittene Darstellung eines erfindungsgemäßen Lufttrockners mit weiteren Komponenten;
- Figur 2: eine teilweise geschnittene Darstellung einer abgewandelten Ausführungsform eines erfindungsgemäßen Lufttrockners mit weiteren Komponenten; und
- Figur 3: eine teilweise geschnittene Darstellung eines Lufttrockners des Standes der Technik.

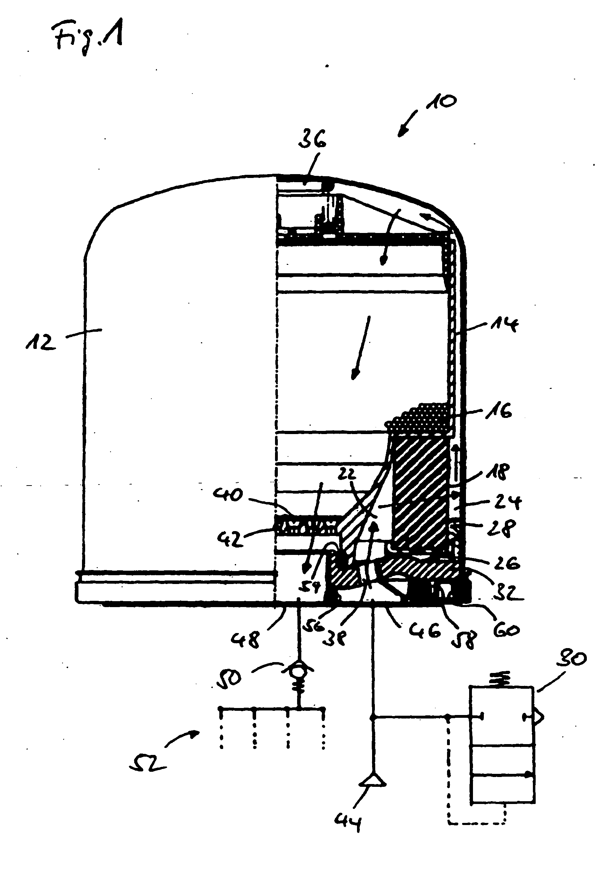

Figur 1 zeigt eine teilweise geschnittene Darstellung eines erfindungsgemäßen Lufttrockners 10 mit weiteren Komponenten. Der Lufttrockner 10 umfasst ein Gehäuse 12 mit einem im Wesentlichen zylindrischen Wandabschnitt. In dem Gehäuse 12 ist ein Trockeneinsatz 14 angeordnet, in dem sich Trockenmittel 16 befindet. Unterhalb des Trockeinsatzes 14 ist ein Koaleszenzfilter 18 angeordnet, das sich über den gesamten Umfang des Lufttrockners 10 erstreckt. Unterhalb des Koaleszenzfilters 18 ist ein Rückschlagventil 26 angeordnet, das einen Weg von dem Vorfilterbereich 22 zu dem Nachfilterbereich 24 entlang einer mit Durchgangsöffnungen 38 versehenen Metallplatte 32 sperrt und in Abhängigkeit der Druckverhältnisse die Strömung in die umgekehrte Richtung erlaubt. Der Trockeneinsatz 14 ist nach unten durch ein Sekundärfilter 40 und eine darunter liegende mit Öffnungen versehene Platte 42 begrenzt. In der Peripherie des Lufttrockners 10 beziehungsweise mit diesem integriert verbaut ist ein zu einem Druckregler gehöriges Ablasssicherheitsventil 30 vorgesehen. Dieses ist parallel zur Druckluftversorgung 44 am Eingang 46 des Lufttrockners 10 angeschlossen. Am Ausgang 48 des Lufttrockners 10 sind über ein Rückschlagventil 50 die Druckluftverbraucher, das heißt insbesondere die hier angedeuteten vier Bremskreise 52 angeschlossen. Der Trockeneinsatz 14 wird von oben durch eine Feder 36 mit Kraft beaufschlagt, um eine dichte Packung des Trockenmittels 16 in dem Trockeneinsatz 14 zu gewährleisten. Es sind diverse Dichtungen 54, 56, 58, 60 vorgesehen, wobei beispielsweise die Dichtungen 54 und 56 den Eingang 46 und den Ausgang 48 gegeneinander abdichten.

Im Normalbetrieb wird Druckluft von der Druckluftversorgung 44 zum Eingang 46 geliefert. Diese Druckluft strömt durch Durchgangsöffnungen 38 in der Metallplatte in den Vorfilterbereich 22 und nachfolgend durch das Koaleszenzfilter 18 in den Nachfilterbereich 24. Fremdpartikel 28 werden von dem Koaleszenzfilter 18 herausgefiltert, und sie sammeln sich im Nachfilterbereich 24 an. Die Luft strömt weiter entlang der Wandung des Gehäuses 12 nach oben und dann von oben in den Trockeneinsatz 14 ein, um das Trockenmittel 16 zu durchströmen und in diesem getrocknet zu werden. Nachfolgend strömt die Luft durch das Sekundärfilter 40 und die mit Öffnungen versehene Platte 42 in Richtung Ausgang 48, um von dort über das Rückschlagventil 50 zu den Verbrauchern, das heißt insbesondere zu den Bremskreisen 52 zu strömen.

Öffnet nun das zum Druckregler gehörige Ablasssicherheitsventil 30, so bricht der Druck im Vorfilterbereich 22 zusammen. Im Nachfilterbereich 24 liegt somit ein erheblich höherer Druck vor als im Vorfilterbereich vor, so dass das eine radial außen befestigte und radial innen freie Gummilippe aufweisende Rückschlagventil 26 öffnet und einen Transport der angesammelten Fremdpartikel 28 aus dem Nachfilterbereich 24 in den Vorfilterbereich 22 und nachfolgend über das Ablasssicherheitsventil 30 in die Atmosphäre gestattet.

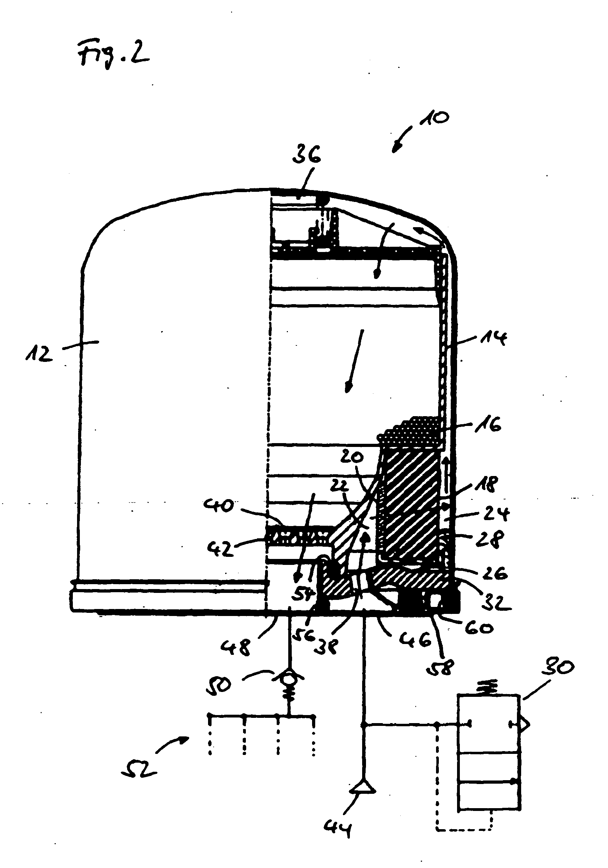

Figur 2 zeigt eine teilweise geschnittene Darstellung einer abgewandelten Ausführungsform eines erfindungsgemäßen Lufttrockners 10 mit weiteren Komponenten. In dieser Ausführungsform ist zusätzlich zur Ausführungsform gemäß Figur 1 ein Vliesfilter 20 vor dem Koaleszenzfilter 18 angeordnet. Dieses bewirkt eine Vorreinigung der Luft, so dass die Reinigung der Luft verbessert und die Lebensdauer des Koaleszenzfilters 18 verlängert wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10; 110: Lufttrockner
- 12; 112: Gehäuse
- 14; 114: Trockeneinsatz
- 16: Trockenmittel
- 18: Filtereinrichtung, Koaleszenzfilter
- 20; 120: Filtereinrichtung, Vliesfilter
- 22: Vorfilterbereich
- 24: Nachfilterbereich
- 26: Rückschlagventil
- 28: Fremdpartikel
- 30: Ablasssicherheitsventil
- 32; 132: Metallplatte
- 134: Metallprofil
- 36; 136: Feder
- 38: Durchgangsöffnungen
- 40: Sekundärfilter
- 42: Platte
- 44: Druckluftversorgung
- 46: Eingang
- 48: Ausgang
- 50: Rückschlagventil
- 52: Bremskreise
- 54: Dichtung
- 56: Dichtung
- 58: Dichtung
- 60: Dichtung

## Patentansprüche

1. Lufttrockner (10), insbesondere zum Einsatz in Druckluftanlagen von Nutzfahrzeugen, mit
- einem Gehäuse (12),
- einem in dem Gehäuse (12) angeordneten Trockeneinsatz (14), in dem Trockenmittel (16) enthalten ist,
- einer Filtereinrichtung (18), die einen Vorfilterbereich (22) von einem unmittelbar an die Filtereinrichtung anschließenden Nachfilterbereich (24) trennt, zum Reinigen der in den Lufttrockner (10) einströmenden Luft, und
- einem als Gummilippe ausgebildeten Rückschlagventil (26), das eine Luftströmung von dem Vorfilterbereich (22) in den Nachfilterbereich (24) unter Umgehung der Filtereinrichtung (18) verhindert und das eine Luftströmung von dem Nachfilterbereich (24) in den Vorfilterbereich (22) unter Umgehung der Filtereinrichtung (18) bei entsprechenden Druckverhältnissen erlaubt,
**dadurch gekennzeichnet, dass** in dem Nachfilterbereich (24) gesammelte Fremdpartikel bei einem Druckgefälle von dem Nachfilterbereich zu dem Vorfilterbereich (22) aus dem Nachfilterbereich in den Vorfilterbereich unter Umgehung der Filtereinrichtung (18) über das Rückschlagventil (26) transportierbar sind.

2. Lufttrockner (10) nach Anspruch 1, **dadurch gekennzeichnet, dass** die Filtereinrichtung ein Koaleszenzfilter(18) umfasst.

3. Lufttrockner (10) nach Anspruch 2, **dadurch gekennzeichnet, dass** das Koaleszenzfilter (18) eine Faltenstruktur aufweist.

4. Lufttrockner (10) nach Anspruch 2, **dadurch gekennzeichnet, dass** das Koaleszenzfilter (18) eine gerollte Struktur aufweist.

5. Lufttrockner (10) nach einem der vorhergehenden Ansprüche, **dadurch gekennzeichnet, dass** die Filtereinrichtung ein vor dem Koaleszenzfilter (18) angeordnetes Vliesfilter (20) aufweist.

6. Lufttrockner (10) nach einem der vorhergehenden Ansprüche, **dadurch gekennzeichnet,**
- **dass** der Lufttrockner (10) in integrierter Bauweise mit einem Druckregler und einem zugehörigen Ablasssicherheitsventil (30) ausgestattet ist und
- **dass** eine Luftströmung von dem Nachfilterbereich (24) in den Vorfilterbereich (22) und damit ein Transport von Fremdpartikeln (28) unter Umgehung der Filtereinrichtung (18) erfolgt, wenn das Ablasssicherheitsventil (30) öffnet.

## Claims

1. Air drier (10), in particular for use in pneumatic systems of commercial vehicles, comprising
- a housing (12),
- a drying insert (14) containing desiccant (16) located in the housing (12),
- a filter device (18) which separates a pre-filtration region (22) from a post-filtration region (24) immediately adjoining the filter device and which is designed for purifying the air flowing into the air drier (10), and
- a check valve (26) designed as a rubber lip, which prevents an air flow from the pre-filtration region (22) into the post-filtration region (24) while bypassing the filter device (18) and which, in suitable pressure conditions, allows an air flow from the post-filtration region (24) into the pre-filtration region (22) while bypassing the filter device (18),
**characterised in that** particles of foreign matter collected in the post-filtration region (24) can be conveyed from the post-filtration region into the pre-filtration region via the check valve (26) while bypassing the filter device (18) if there is a pressure gradient from the post-filtration region to the pre-filtration region (22).

2. Air drier (10) according to claim 1, **characterised in that** the filter device comprises a coalescence filter (18).

3. Air drier (10) according to claim 2, **characterised in that** the coalescence filter (18) has a fluted structure.

4. Air drier (10) according to claim 2, **characterised in that** the coalescence filter (18) has a rolled structure.

5. Air drier according to any of the preceding claims, **characterised in that** the filter device comprises a non-woven filter (20) located upstream of the coalescence filter (18).

6. Air drier (10) according to any of the preceding claims, **characterised in that**
- the air drier (10) is equipped with a pressure regulator and an associated discharge safety valve (30) in an integrated construction, and
- there is an air flow from the post-filtration region (24) into the pre-filtration region (22) and thus a transfer of particles of foreign matter (28) while bypassing the filter device (18) if the discharge safety valve (30) opens.

## Revendications

1. Dessiccateur d'air (10), à utiliser en particulier dans des installations à air comprimé de véhicules utilitaires, comportant
- un boîtier (12),
- un insert de dessiccation (14) qui est placé dans le boîtier (12) et qui contient de l'agent dessiccateur (16),
- un dispositif de filtration (18) qui sépare une zone de filtration amont (22) et une zone de filtration aval (24) située immédiatement après le dispositif de filtration et servant à purifier l'air qui entre dans le dessiccateur d'air (10) et
- un clapet antiretour (26) qui empêche l'air de s'écouler depuis la zone de filtration amont (22) dans la zone de filtration aval (24) en contournant le dispositif de filtration (18) et qui permet à l'air de s'écouler depuis la zone de filtration aval (24) dans la zone de filtration amont (22) en contournant le dispositif de filtration (18) en présence de conditions adaptées de pression,
**caractérisé en ce que** des particules étrangères collectées dans la zone de filtration aval (24) peuvent, quand il y a une chute de pression de la zone de filtration aval vers la zone de filtration amont (22), être transportées, en passant par le clapet antiretour (26), depuis la zone de filtration aval dans la zone de filtration amont en contournant le dispositif de filtration (18).

2. Dessiccateur d'air (10) selon la revendication 1, **caractérisé en ce que** le dispositif de filtration comprend un filtre (18) à coalescence.

3. Dessiccateur d'air (10) selon la revendication 2, **caractérisé en ce que** le filtre (18) à coalescence a une structure plissée.

4. Dessiccateur d'air (10) selon la revendication 2, **caractérisé en ce que** le filtre (18) à coalescence a une structure enroulée.

5. Dessiccateur d'air (10) selon l'une des revendications précédentes, **caractérisé en ce que** le dispositif de filtration a un filtre en non-tissé (20) en amont du filtre (18) à coalescence.

6. Dessiccateur d'air (10) selon l'une des revendications précédentes, **caractérisé en ce que**
- le dessiccateur d'air (10) de conception intégrée est équipé d'un régulateur de pression et d'une soupape de décharge de sécurité (30) correspondante, et
- de l'air s'écoule depuis la zone de filtration aval (24) dans la zone de filtration amont (22) et donc des particules étrangères (28) sont transportées en contournant le dispositif de filtration (18) quand la soupape de décharge de sécurité (30) s'ouvre.
